(19) Europäisches Patentamt
European Patent Office
Office européen des brevets

(11) Veröffentlichungsnummer: **0 114 262**
**B1**

(12) # EUROPÄISCHE PATENTSCHRIFT

(45) Veröffentlichungstag der Patentschrift: **18.10.89**

(51) Int. Cl.⁴: **H 01 M 4/12**, H 01 M 4/66, H 01 M 4/42

(21) Anmeldenummer: **83112075.3**

(22) Anmeldetag: **01.12.83**

(54) **Zinkelektrode für galvanisches Element.**

(30) Priorität: **18.12.82 DE 3246957**

(43) Veröffentlichungstag der Anmeldung: **01.08.84 Patentblatt 84/31**

(45) Bekanntmachung des Hinweises auf die Patenterteilung: **18.10.89 Patentblatt 89/42**

(84) Benannte Vertragsstaaten: **BE CH DE FR GB IT LI NL**

(56) Entgegenhaltungen:
**EP-A- 0 070 373**
**EP-A- 0 080 064**
**FR-A- 2 114 666**
**FR-A- 2 121 812**
**FR-A- 2 209 222**
**GB-A- 2 064 209**

**CHEMICAL ABSTRACTS, Band 83, Nr. 22, 1. Dezember 1975, Seite 184, Nr. 182022c, Columbus, Ohio, US; & JP - A - 75 02 135 (HITACHI MAXELL LTD.) 10-01-1975**
**CHEMICAL ABSTRACTS, Band 91, Nr. 18, Oktober 1979, Seite 511, Nr. 148519a, Columbus, Ohio, US; & JP - A - 79 80 519 (CITIZEN WATCH CO. LTD.) 27-06-1979**

**Die Akte enthält technische Angaben, die nach dem Eingang der Anmeldung eingereicht wurden und die nicht in dieser Patentschrift enthalten sind.**

(73) Patentinhaber: **VARTA Batterie Aktiengesellschaft, Am Leineufer 51, D-3000 Hannover 21 (DE)**

(72) Erfinder: **Jung, Margarete, Parkstrasse 15-17, D-6233 Kelkheim (DE)**

(74) Vertreter: **Kaiser, Dieter Ralf, Dipl.-Ing., Gundelhardtstrasse 72, D-6233 Kelkheim/Ts. (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die Erfindung betrifft ein galvanisches Element mit negativer Zinkelektrode, die einen metallischen Ableiter besitzt, und mit einem alkalischen Elektrolyten.

Wegen der thermodynamischen Instabilität des Zinks vorzugsweise im alkalischen Medium unterliegen Zinkelektroden in galvanischen Zellen einem Korrosionsprozeß, welcher die Lebensdauer der Zellen verkürzt. Die Auflösung des Zinks wird durch Fremdmetallverunreinigungen an seiner Oberfläche noch beschleunigt, was darauf beruht, daß die meist aus edleren Metallen bestehenden Verunreinigungen mit dem Zink galvanische Paare bilden, derart, daß das Zink an den Berührungsstellen mit dem Fremdmetall korrodiert und an den Verunreinigungen Wasserstoff entwickelt wird, so daß eine Bombierung der Zellen erfolgt (vgl. z.B. H. Remy, Lehrbuch der Anorganischen Chemie II, Akademische Verlagsgesellschaft Geest & Portig KG, Leipzig 1961, Seite 512/13)

Obwohl das für Batteriezwecke allgemein verwendete Feinzink aus einer Umdestillation des Hüttenrohzinks hervorgegangen ist, liegt sein Gehalt an Verunreinigungen insbesondere durch die Schwermetalle Pb, Cd, Sn und Fe, von denen Fe besonders störend ist, noch immer bei insgesamt einigen zehntel Prozent.

Um die störende Wirkung der Verunreinigungen herabzusetzen, ist es üblich, das Zink zu amalgamieren (Quecksilbergehalt: 3 bis 8 Gew.%). Das amalgamierte Zink hat eine wesentlich höhere Wasserstoffüberspannung als quecksilberfreies Zink. Die Ausbildung der oben erwähnten galvanischen Paare oder Lokalelemente ist dann auf der gleichmäßig amalgamierten Elektrodenoberfläche nicht mehr möglich.

Aus Gesundheitsrücksichten war man indessen bemüht, das Quecksilber durch andere Stoffe mit inhibierender Wirkung zu ersetzen und dabei Zinkelektroden von zumindest gleichen elektrochemischen Eigenschaften wie die amalgamierten verfügbar zu machen. Bekannte Vorschläge umfassen u.a. Legierungszusätze, wobei es darauf ankommt, solche Metalle auszuwählen, die selbst eine hohe Wasserstoffüberspannung besitzen, daneben auch Zusätze zum Elektrolyten wie $Na_2S$ oder $K_2Cr_2O_7$, die sich in stabile Deckschichten aus ZnS bzw. $Cr_2O_3$ auf der Zinkoberfläche verwandeln. Bei der Verwendung von organischen Inhibitoren in alkalischen Elektrolyten, z.B. p-Dicyclohexylbenzol gemäß US-A 3 281 276, kommt es wahrscheinlich ebenfalls zur Ausbildung monomolekularer Deckschichten auf dem Metall, die auf Adsorption oder Chemisorption der organischen Verbindung an der Metalloberfläche zurückzuführen sind.

Daraus folgt aber auch nicht selten eine Blokkierung der Elektrodenaktivität.

Abgesehen davon, daß viele organische Inhibitoren physiologisch nicht unbedenklich sind, liefert die Literatur auch Hinweise dafür, daß ihrer Wirksamkeit Grenzen gesetzt sind. So lassen sich der DE-B 2 246 753 z.B. Äthylenoxid-Polymere als Inhibitoren entnehmen, deren Anwendungskonzentration von 0,1 bis 1 Gew.%, bezogen auf das Zink, offenbar nicht ausreicht, um auf eine Amalgamierung ganz verzichten zu können. Der Quecksilbergehalt wurde lediglich von 8 auf 4 Gew.% gesenkt.

Die Nachprüfung des Korrosionsverhaltens von nichtamalgamiertem Zink im alkalischen Medium mit Bestimmung der entwickelten Wasserstoffmenge ergab sogar eine Korrosionsrate, die eindeutig unter einigen Literaturdaten liegt, welche für amalgamiertes oder auf andere Weise inhibiertes Zink gelten (z.B. F. Mansfeld und S. Gilman: J. Electrochem. Soc. 117 (1970) 588 oder R.N. Snyder und J.J. Lander: Electrochem. Technol. 3, 1/2 (1965) 161). So stehen einer für das ungeschützte Zink selbst ermittelten Korrosionsrate von 0,0065 mg $Zn/cm^2 \cdot 24$ h breit gestreute Literaturwerte von 0,146 bis 4,200 mg $Zn/cm^2 \cdot 24$ h für geschützte Zinkproben gegenüber.

In der Batteriepraxis hat man jedoch bisher stets amalgamiertes oder inhibiertes Zink verwendet, da sich auf anderen Wegen eine Gasung in der Zelle nicht vermeiden ließ. Aus den unbefriedigenden Erfahrungen, die sich im allgemeinen an die bisherigen Versuche zur Erreichung einer guten und lange anhaltenden Korrosionsstabilität von Zinkelektroden in alkalischen Elektrolyten geknüpft haben, ergibt sich die Aufgabe, eine möglichst praxisgerechte Maßnahme zur Korrosionsinhibierung anzugeben, die auch den verschärften Interessen des Umweltschutzes Rechnung trägt.

Die Aufgabe wird erfindungsgemäß dadurch gelöst, daß das aktive Material der negativen Elektrode als Zinkpulver oder als Zinkpaste vorliegt, die quecksilberfrei sind oder einen Quecksilbergehalt von höchstens 1 Gew.% aufweisen, und daß die Oberfläche des metallischen Ableiters amalgamiert ist.

Das vorzugsweise eingesetzte Anodenzink soll quecksilberfrei sein und kann ggf. 0,05 bis 0,5 Gew.% Quecksilber enthalten.

Es hat sich gezeigt, daß Zink unabhängig von seiner metallurgischen Aufbereitung und Reinheit, ob amalgamiert oder quecksilberfrei, in Berührung mit Ableitern besonders stark korrodiert, indem an der Berührungsstelle Zink/Ableiter die Wasserstoffüberspannung durch Ausbildung von Lokalelementen herabgesetzt wird. Durch die erfindungsgemäße Maßnahme wird offenbar eine quasi-Homogenisierung der elektrochemischen Potentiale von Ableiter und Anodenzink erreicht, so daß die Zelle für eine Wasserstoffgasung weniger anfällig geworden ist. Vermutlich geschieht dies dadurch, daß die im Vergleich zum Anodenzink geringere Wasserstoffüberspannung des Ableitermetalls durch die Amalgambildung angehoben wird.

Durch das Experiment kann sogar nachgewiesen werden, wie stark die Zinkkorrosion im einzelnen unter dem Einfluß verschiedener Ableitermaterialien ist. Dabei zeigt sich eine Abhängigkeit der Korrosionsrate des Zinks in dem Sinne, daß sie entsprechend der Reihenfolge der Versuchsmaterialien Gold, Kupfer, Nickel, Messing zunimmt.

Zur Durchführung der Versuche werden in einen 300 ml-Erlenmeyerkolben jeweils 50 g New Jersey-Zinkpulver der Korngröße 200–500 u unter Argon als Schutzgas eingetragen, mit 300 ml 8 n KOH überschichtet und darauf mehrere Wochen mit einem Metallblech aus einem der genannten Materialien (im Falle des Goldes ein vergoldetes Nickelblech) von jeweils 1 $cm^2$ Größe kontaminiert. Durch eine parallele Versuchsreihe mit jeweils amalgamierten Blechproben – in Nachvollziehung der erfindungsgemäßen Maßnahme – wird ein deutlicher Rückgang der anodischen Zinkauflösung, augenfällig durch eine stark verminderte oder fast zum Stillstand gekommene Gasentwicklung, registriert. Die jeweils von dem eingesetzten Zinkpulver in Lösung gegangene Zinkmenge wird maßanalytisch mit 1/10 molarer Komplexon III-Lösung in Gegenwart von Eriochromschwarz T als Indikator bestimmt.

Die nachstehende Tabelle gibt eine Aufschlüsselung der Versuche nach den verschiedenen Ableitermaterialien, wobei Zn das reine Zinkpulver ohne Berührung mit einem Fremdmetall (Bezugsmaterial) und der Zusatz (Hg) ein jeweils amalgamiertes Metallblech bedeuten. Die Amalgamierung wird in bekannter Weise durch Einwirkenlassen einer wäßrigen Quecksilber(II)-Chloridlösung (27,1 g Hg $Cl_2$/1 l $H_2O$) auf die zuvor mit 0,2 normaler HCl abgebeizten Bleche vorgenommen. Als Amalgamierungslösung ist auch eine 1 bis 10%ige Quecksilber(II)-Nitratlösung geeignet, die zur Vermeidung von Hydrolyse mit Salpetersäure angesäuert wird.

Einfluß verschiedener Ableitermetalle auf die Korrosionsrate des Zinkpulvers in 8-normaler KOH.

| Versuch Nr. | Ableiter-material | mg gelöstes Zink/50 g Einwaage Versuchsdauer (Stunden) | | | | |
|---|---|---|---|---|---|---|
| | | 24 | 48 | 168 | 240 | 484 |
| 1 | Zn | 45,1 | 49,7 | 68,7 | 79 | 102 |
| 2 | Ni | 113,8 | 148,5 | 225,6 | 305 | 360 |
| 3 | Cu | 68,7 | 85,7 | 143,2 | 175 | 210 |
| 4 | Cu (Hg) | 47,1 | 49,7 | 68,7 | 79 | 102 |
| 5 | Messing | 98,1 | 150,3 | 229,5 | 325 | 399 |
| 6 | Messing (Hg) | 45,1 | 49,7 | 68,7 | 85 | 115 |
| 7 | Au | 78,5 | 87,0 | 107,9 | 120 | 153 |
| 8 | Au (Hg) | 45,1 | 49,7 | 68,7 | 79 | 102 |

Die Figur zeigt die Zunahme der Zinkkorrosion (gelöstes Zn in mg/50 g Zn) in Abhängigkeit von der Zeit (in h) nach den Zahlenwerten der vorstehenden Tabelle in einer Graphik mit den verschiedenen Ableitermetallen als Parameter. Die Nummern der Kurven sind den Versuchs-Nummern der Tabelle zugeordnet.

Als wesentliches Ergebnis wird deutlich, daß die Zinkkorrosion bei der Kontaminierung mit den amalgamierten Blechen (ausgezogene Kurven) im Vergleich zu den nichtamalgamierten (punktierte Kurven) stark eingeschränkt ist und während der gesamten Versuchsdauer nahezu auf dem gleichen niedrigen Niveau der Bezugsprobe (ohne Blech) verharrt.

Separat durchgeführte Untersuchungen berechtigen ferner zu der Feststellung, daß ein mit 6 Gew.% Quecksilber amalgamiertes Zinkpulver sich in seinem Korrosionsverhalten von dem quecksilberfreien New Jersey-Zink der Bezugsprobe nicht unterscheidet. Dieser Befund ist für die erfindungsgemäße Maßnahme insofern bedeutsam, als die Amalgamierung der Zinkelektrode selbst sich als überflüssig erweist, da sie zu der aufgabengemäß angestrebten Korrosionsinhibierung nicht zusätzlich beiträgt. Die dafür üblicherweise aufgewendete Quecksilbermenge kann daher eingespart werden.

Da das Quecksilber im Zink an der Entladung nicht teilnimmt, selbst also keinen Kapazitätsbeitrag liefert, wird die Zinkelektrode durch den Quecksilber-Verzicht leichter und birgt nicht die Gefahr von Kurzschlüssen bei der Entladung durch rollende Quecksilbertropfen. Amalgamierung oder Inhibierung mit «exotischen» Zusätzen machen das Zink dagegen unnötig teuer.

Legt man die nach 484 Versuchsstunden aus 50 g nichtkontaminiertem Zinkpulver gelösten 102 mg Zn zugrunde (Figur, Kurve 1), so beträgt die im gleichen Zeitraum gelöste Zn-Menge bei Verwendung eines vergoldeten Ableiters die 1,5-fache Menge (Kurve 7), bei Verwendung eines Cu-Ableiters die 2-fache Menge (Kurve 3), bei Verwendung eines Ni-Ableiters die ca. 3,5-fache Menge (Kurve 2) und bei Verwendung eines Messingableiters die 4-fache Menge (Kurve 5).

Bei den in elektrochemischen Zellen verwendeten Ableitern handelt es sich zumeist um Nägel (Trockenzellen), Drähte (zugleich Zellenverbinder in mehrzelligen Trockenbatterien) oder Gehäuseteile von Knopfzellen (z.B. Deckel). Ihre Amalgamierung erfolgt bei hohen Stückzahlen mit Hilfe von Transporteinrichtungen, beispielsweise einem für die Beschickung mit Nägeln perforierten Endlosband, welches verschiedene Behandlungsstationen im Durchlauf passiert, jedoch so, daß die Nagelköpfe von der Amalgamierung ausgenommen bleiben.

Die Behandlung umfaßt insgesamt folgende Schritte:

1. Entfetten
2. Beizen
3. Amalgamieren
4. Waschen
5. Trocknen

Zum Erfolg der erfindungsgemäßen Amalgamierung tragen die vorbereitenden Schritte Entfetten und Beizen dadurch bei, daß die Gleichmäßigkeit der Amalgamschicht erhöht wird. Nicht entfettete Oberflächen von Ableitern, zu denen auch Metallgewebenetze, Metallgewebekörbchen, Streckmetalle und Lochbleche gezählt werden können, werden nur unvollkommen von Hg-Salzlösungen befeuchtet oder von Hg benetzt. Ebenso lassen sich Metalloberflächen mit dünnen Oxidhäuten nicht amalgamieren, weshalb die Beizbehandlung eine Befreiung von den Oxidschichten bezweckt. An unvollständig vorgereinigten Metalloberflächen tritt eine fleckige Aufnahme des Quecksilbers auf; die resultierenden Oberflächen-Inhomogenitäten können zur Bildung von Lokalelementen mit der Folge von unerwünschter $H_2$-Entwicklung und Zn-Korrosion führen. Wird beispielsweise ein unsachgemäß oder nicht vorbehandelter amalgamierter Cu-Ableiter (Nagel) in die Zn-Masse eingedrückt, reduziert das Zn das stellenweise noch vorhandene CuO oder $Cu_2O$, so daß blankes Cu-Metall in feiner Verteilung und mit einer unerwünschten geringen $H_2$-Überspannung freigelegt wird.

Die verwendeten Ableiter sollen ferner rißfreie Oberflächen aufweisen, da sich gezeigt hat, daß sich Risse unter der Einwirkung der Amalgamierungslösung verbreitern.

Zu den Vorbehandlungen im einzelnen:

Die Entfettung geschieht mit Hilfe anorganischer oder organischer Fettlösemittel, je nach Beschaffenheit des Ableiters. Besteht dieser aus Kupfer, Messing oder Bronze, sollte die Badflüssigkeit einen pH-Wert von 10 nicht übersteigen. Ein stärker alkalisches Milieu ist insbesondere bei Vorhandensein von Zinn als Legierungskomponente im Ableitermetall wegen möglicher Auflösung (Bildung von Alkalistannaten) bedenklich. Der Reinigungsprozeß läßt sich durch erhöhte Temperatur, Bewegung der Teile oder durch Ultraschall fördern. Die anorganischen Fettlösemittel sind wäßrige Lösungen mit Zusätzen grenzflächenaktiver Stoffe, die organischen umfassen Lösungsmittel wie Alkohole, Äther, Ketone, chlorierte Kohlenwasserstoffe wie z.B. Trichloräthylen. Besonders vorteilhaft ist hier die Dampfentfettung, da sie den abschließenden Schritt jeder Lösungsmittel-Entfettung, nämlich das Verdampfen des Lösungsmittels, mit einschließt und erneute Kontamination mit den abgelösten Verunreinigungen vermeidet. Auf eine Entfettung mit wäßrigen Lösungen folgt stets eine Waschung und Trocknung.

Die Beizbehandlung mit Säuren wie verd. HCl oder $H_2SO_4$ kann zur Vermeidung einer unnötigen Metallabtragung vorteilhaft unter Verwendung von Sparbeizen (z.B. Thioharnstoff, Triäthanolamin) erfolgen. Bei Ableitern aus Kupfer, Messing oder Bronze sind Mischsäuren aus $HNO_3$, HCl und $H_2SO_4$ empfohlen. Zur Erzielung besonders glatter Oberflächen kann sich an eine Vorbeize noch eine Glanzbeize anschließen.

Eine alternative Beizbehandlung stellt die Oxidbeseitigung mit Hilfe starker Reduktionsmittel wie Hydrazin, Boranat oder Wasserstoff dar.

Den Abschluß jeder Beizung bilden gründliches Waschen mit fließendem Wasser und Trocknen, evtl. mit Methanol oder iso-Propanol.

Für den folgenden Amalgamierungsschritt lassen sich die weiter unten als Beispiele a) bis h) angegebenen Mittel verwenden. Wichtig ist, daß nur ein kurzes Eintauchen (ca. 3 sec.) der Gegenstände in die Flüssigkeiten genügt. Die Tauchzeit wäre jedoch auf 6 sec. zu verdoppeln, wenn nur jeweils die Hälfte der weiter unten angegebenen Quecksilbersalz-Mengen eingesetzt würde. Die Amalgamierung erfolgt dabei stromlos, kann aber in bestimmten Fällen auch unter kurzzeitiger kathodischer Strombelastung der Teile wie eine elektrolytische Abscheidung gehandhabt werden. Ist eine nur teilweise Amalgamierung erwünscht, ein dementsprechend begrenztes Eintauchen aber nicht möglich oder nur mittels umständlicher Aufhängevorrichtungen durchführbar, können die nicht zu behandelnden Partien der Ableiter z.B. durch gezielte oberflächliche Oxidation oder durch Bestreichen mit Lacken oder Paraffin maskiert werden.

Wäßrige Amalgamierungsflüssigkeiten sind ggf. durch einen Säurezusatz auf die Acidität einer ca. 1-normalen starken Säure eingestellt, um eine Hydrolyse des Quecksilbersalzes zu verhindern (vgl. Beispiele a) und b)).

Beispiele für Amalgamierungsbäder:

a) 10 g $Hg(NO_3)_2 \times H_2O$ in 1 l $H_2O$, Zusatz von $HNO_3$
b) 7,5 g $HgCl_2$ in 1 l $H_2O$, Zusatz von HCl
c) 7,5 g $HgCl_2$ + 4 g $NH_4Cl$ in 1 l $H_2O$
d) 6 g $Hg(CN)_2$ + 5 g KCN in 1 l $H_2O$
(Bildung komplexer Quecksilber-Alkalicyanide vom
Typ $M^I Hg(CN)_3$ oder $M^I_2 Hg(CN)_4$)
e) $HNO_3$-saure $HgSO_4$-Lösungen
f) flüssiges Quecksilber
g) flüssiges Alkaliamalgam
h) Quecksilberdampf im Vakuum

Wegen der Lichtempfindlichkeit der Quecksilbersalze sollten ihre Lösungen im Dunklen aufbewahrt werden.

Nach der Amalgamierung sind gründliches Waschen und Trocknen selbstverständlich. Es empfiehlt sich dann eine rasche Verarbeitung der Ableiter. Bei einer Lagerung sind direktes Sonnenlicht, Feuchtigkeit und Hitze von mehr als 70 °C auszuschließen.

Alternativ zu einem solchen Naßprozeß kommt auf ein Aufdampfen im Vakuum, ggf. zuerst von Zink, dann des Quecksilbers infrage.

Der an Modellversuchen zunächst nachgewiesene Vorteil einer erfindungsgemäßen Amalgamierung des Ableiters für quecksilberfreie Zinkelektroden konnte auch durch Tests mit Zellen aus einer Pilotfertigung bestätigt werden. An jeweils 20 Zellen aus einem bestimmten Fertigungslos wurde als Maß für die Lagerbeständigkeit bei

45 °C die sog. Treibrate gemessen, welche die Größe bzw. Geschwindigkeit des sich infolge Zn-Korrosion aufbauenden Zelleninnendrucks beschreibt. Da dieser Druck innerhalb Grenzen mit der Gesamthöhe $h_t$ der Zelle korreliert und eine Änderung der Zellenhöhe von 0,10 mm einer Änderung des Zelleninnendrucks von ca. 2,1 bar entspricht, ist die Treibrate $(h_t-h_o)/t$ durch zwei Maßzahlen gekennzeichnet. Sie betrug 0,0009 mm/Tag = $1{,}89 \cdot 10^{-2}$ bar/Tag für Zellen mit Hg-armen (0,1% Hg), pastierten Zinkelektroden in Gegenwart geätzter und amalgamierter Messingableiter (erfindungsgemäß), dagegen 0,0117 mm/Tag = $24{,}6 \cdot 10^{-2}$ bar/Tag für Zellen mit blanken Messingableitern.

Danach ist es möglich, die Korrosion durch Einsatz von vorher amalgamierten Ableitern stark zu hemmen, was zugleich bedeutet, daß eine Inhibierung des Zinks bereits mit kleinsten Quecksilbermengen gelingt. Außer den bereits genannten Ableitermaterialien kommen auch Nickel, verkupfertes Eisen, vernickeltes Eisen, vergoldetes Eisen, legierter Stahl oder Trimetall, zumindest als Material der zu amalgamierenden Grundschicht, infrage. Bei einem Trimetall mit der Schichtenfolge Cu-Fe-Ni, aus welchem z.B. ein Knopfzellendekkel besteht, ist nur die Cu-Seite amalgamiert und dem Zink zugekehrt. Erfindungsgemäß können alle erwähnten Ableiter auch auf der Grundlage einer vorausgegangenen Verzinkung amalgamiert sein.

In einer besonders vorteilhaften Ausführungsform der Erfindung bietet sich ein zum Zwecke der Korrosionsinhibierung versilbertes Anodenzink, sei es in Pulverform oder als Paste, an. Die Versilberung eines quecksilberfreien, reinen Zinkpulvers kann auf folgende Weise geschehen:

In die auf 8–10 °C gekühlte wäßrige Lösung von 50 g $Na_2S_2O_3 \cdot 5\,H_2O$ in 100 $cm^3$ werden 0,230 g AgO gelöst und 100 g Zinkpulver zugesetzt und etwa 3 Minuten lang geschüttelt. Das versilberte Zink wird rückstandsfrei gewaschen und mindestens 90 Stunden bei 60 °C in 30%iger KOH, enthaltend 3% ZnO, getempert. Anschließend folgt der Waschprozeß mit dest. Wasser und möglichst rasches Trocknen bei Raumtemperatur im Vakuum.

Nach längerer Betriebszeit einer mit nichtamalgamierten negativen Stromableitern versehenen, also nicht-erfindungsgemäßen alkalischen Zinkzelle beobachtet man eine Abnahme der Korrosionsrate bei gleichzeitiger Ablagerung von Zink auf dem Ableiter in Form einer sehr glatten Schicht. Beim intermittierenden Entladen der Zelle, aber auch im Zyklenbetrieb wird jedoch diese Zinkschicht wieder abgelöst, so daß dann erneut eine stärkere Gasung einsetzt. Zusätzlich besteht die Gefahr, daß sich eine anfangs auf dem Ableiter vorhandene Oxidschicht, z.B. CuO, in der Elektrolytlauge auflöst, um sich später wieder auf dem Zink abzuscheiden, wodurch es zur Ausbildung von Lokalelementen kommen kann.

Verwendet man ferner in nichterfindungsgemäßer Weise amalgamiertes Anodenzink in der Zelle, so sind Reaktionsabläufe im Bereich der negativen Elektrode gemäß den nachstehenden Formulierungen wahrscheinlich.

(1) $Zn_xHg_y + 2 \times KOH \rightarrow xK_2ZnO_2 + xH_2 + yHg$
(2) $yHg + zCu \rightarrow Cu_z\,Hg_y$

Dies würde bedeuten, daß vor der Ausbildung der schützenden Amalgamschicht auf dem Ableiter ein äquivalenter Teil des Zinks unter Wasserstoffentwicklung in Lösung geht. Dies bedeutet einmal einen Zinkverlust (Selbstentladung), zusätzlich besteht die Gefahr, daß es bei einem schnellen Verschluß der Zellen zu einem Druckaufbau und damit zu einem Bombieren der Zellen kommen kann.

Die genannten Mängel werden durch die erfindungsgemäße Maßnahme ausgeräumt. Erst mit der Ableiter-Amalgamierung ist die Funktionsfähigkeit einer alkalischen Zinkzelle mit quecksilberfreiem Anodenzink weitgehend sichergestellt. Die hierbei einzusetzende Quecksilbermenge beträgt Bruchteile des in üblichen Zinkelektroden enthaltenen Quecksilbers. Ein erfindungsgemäßes galvanisches Element ist damit umweltfreundlicher und zugleich kostengünstiger.

**Patentansprüche**

1. Galvanisches Element mit negativer Zinkelektrode, die einen metallischen Ableiter besitzt, und mit einem alkalischen Elektrolyten, dadurch gekennzeichnet, daß das aktive Material der negativen Elektrode als Zinkpulver oder als Zinkpaste vorliegt, die quecksilberfrei sind oder einen Quecksilbergehalt von höchstens 1 Gew.% aufweisen, und daß die Oberfläche des metallischen Ableiters amalgamiert ist.

2. Galvanisches Element nach Anspruch 1, dadurch gekennzeichnet, daß das Zink zwischen 0,05 und 0,5 Gew.% Quecksilber enthält.

3. Galvanisches Element nach den Ansprüchen 1 und 2, dadurch gekennzeichnet, daß das Zink mit Silber dotiert ist.

4. Galvanisches Element nach einem der Ansprüche 1 bis 3, dadurch gekennzeichnet, daß das Ableitermetall Kupfer, Messing, Nickel, verkupfertes Eisen, vernickeltes Eisen, vergoldetes Eisen, legierter Stahl oder Trimetall ist.

5. Galvanisches Element nach Anspruch 4, dadurch gekennzeichnet, daß das Ableitermetall vor dem Amalgamieren der Oberfläche des Ableiters verzinkt ist.

6. Galvanisches Element nach einem der Ansprüche 1 bis 5, dadurch gekennzeichnet, daß der metallische Ableiter ein Nagel ist.

**Claims**

1. Galvanic element with a negative zinc electrode, which comprises a metallic conductor and with an alkaline electrolyte, characterised in that the active material of the negative electrode is present as zinc powder or zinc paste, which are free of mercury or have a maximum mercury content of 1% by weight and that the surface of the metallic conductor is amalgamated.

2. Galvanic element according to Claim 1, characterised in that the zinc contains between 0.05 and 0.5% by weight mercury.

3. Galvanic element according to Claims 1 and 2, characterised in that the zinc is doped with silver.

4. Galvanic element according to one of Claims 1 to 3, characterised in that the conductor metal is copper, brass, nickel, copper-plated iron, nickel-plated iron, gold-plated iron, alloy steel or trimetal.

5. Galvanic element according to Claim 4, characterised in that the conductor metal is coated with zinc before the amalgamation of the surface of the conductor.

6. Galvanic element according to one of Claims 1 to 5, characterised in that the metallic conductor is a nail.

## Revendications

1. Elément galvanique avec électrode négative en zinc qui possède un conducteur métallique et avec un électrolyte alcalin, caractérisé en ce que la matière active de l'électrode négativ se présente sous la forme de poudre de zinc ou de pâte de zinc qui sont exemptes de mercure ou bien présentent une teneur en mercure qui est au plus de 1% en poids et en ce que la surface du conducteur métallique est amalgamée.

2. Elément galvanique selon la revendication 1, caractérisé en ce que le zinc contient entre 0,05 et 0,5% en poids de mercure.

3. Elément galvanique selon les revendications 1 et 2, caractérisé en ce que le zinc est dopé d'argent.

4. Elément galvanique selon l'une des revendications 1 à 3, caractérisé en ce que le métal du conducteur est du cuivre, du laiton, du nickel, du fer cuivré, du fer nickelé, du fer doré, de l'acier allié ou un trimétal.

5. Elément galvanique selon la revendication 4, caractérisé en ce que le métal du conducteur est zingué avant amalgamation de la surface du conducteur.

6. Elément galvanique selon l'une des revendications 1 à 5, caractérisé en ce que conducteur métallique est une pointe.

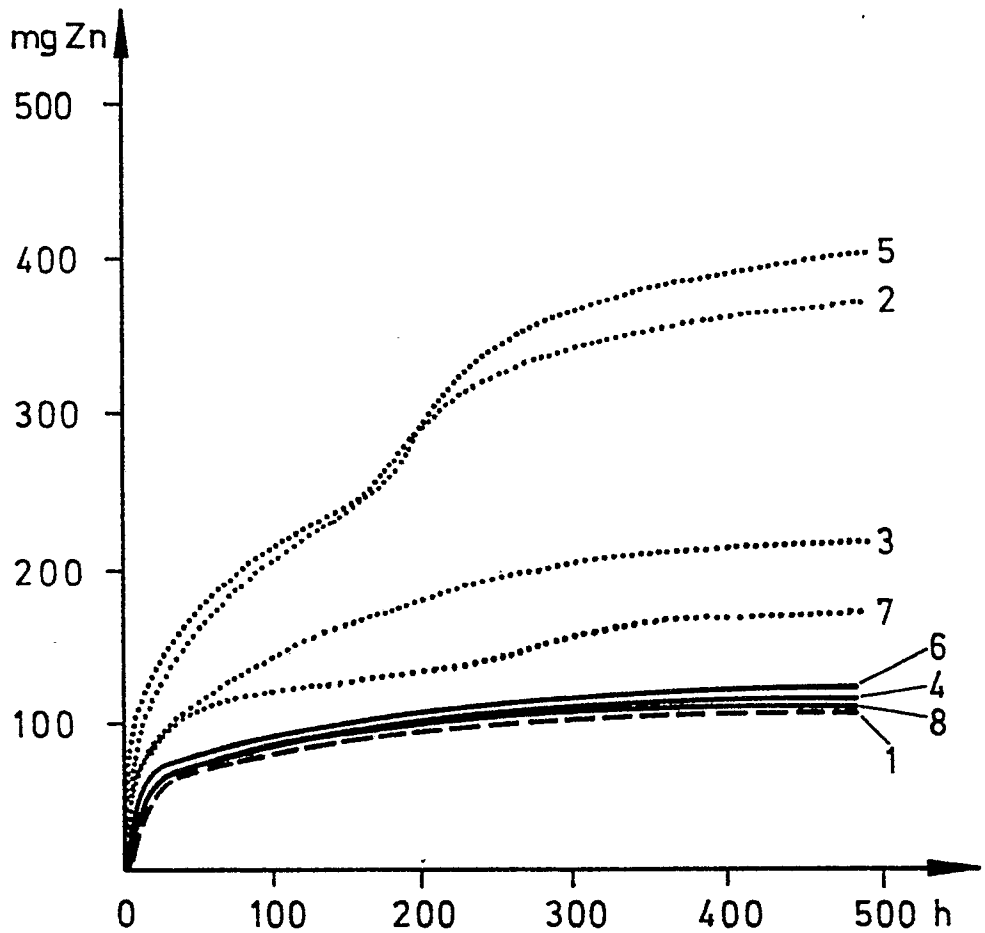
mg Zn
500
400
300
200
100
0
100
200
300
400
500 h
5
2
3
7
6
4
8
1